# EUROPÄISCHE PATENTSCHRIFT

(11) **EP 2 593 249 B1**
(45) Veröffentlichungstag und Bekanntmachung des Hinweises auf die Patenterteilung: **29.06.2016**
(21) Anmeldenummer: 11733675.0
(22) Anmeldetag: 14.07.2011
(51) Int. Cl.: B21H 1/20, B21H 3/02

(54) **HERSTELLUNGSVERFAHREN FÜR EIN HALBZEUG**
PROCESS FOR PRODUCING A SEMIFINISHED PRODUCT
PROCÉDÉ DE FABRICATION D'UN DEMI-PRODUIT

(30) Priorität: 14.07.2010 DE 102010031316
(43) Veröffentlichungstag der Anmeldung: 22.05.2013
(73) Patentinhaber: HILTI Aktiengesellschaft, 9494 Schaan (LI)
(72) Erfinder: SELB, Michael, A-6800 Feldkirch (AT); WISSLING, Matthias, 59227 Ahlen (DE); KÜPER, Armin, CH-9488 Schellenberg (LI)
(74) Vertreter: Hilti Aktiengesellschaft Corporate Intellectual Property
(86) Internationale Anmeldenummer: PCT/EP2011/062047
(87) Internationale Veröffentlichungsnummer: WO 2012/007543

(56) Entgegenhaltungen:
- EP-A2- 0 754 511
- EP-A2- 2 156 909
- GB-A- 2 321 607
- JP-A- 62 244 543
- US-A- 996 840

## Beschreibung

### GEBIET DER ERFINDUNG

Die vorliegende Erfindung betrifft ein Herstellungsverfahren für ein Halbzeug, insbesondere ein längliches mit wenigstens zwei unterschiedlich profilierten Abschnitten versehenes Halbzeug, z.B. einen Ankerbolzen.

Aus der GB 2 321 607 A ist ein Fertigungsverfahren für einen Verbindungsbolzen bekannt, bei dem ein Gewindebereich und ein zweiter Bereich simultan gewalzt werden. Ein weiteres Walzverfahren für Bölzen ist aus der JP 62-244543 A bekannt. Die EP 2 156 909 A2 offenbart ein Fertigungsverfahren für Schrauben oder Gewindebolzen, bei dem ein Gewindepresswerkzeug zum Einsatz kommt.

### OFFENBARUNG DER ERFINDUNG

Ein Gewinde für einen Ankerbolzen kann durch Querwalzen hergestellt werden. Ein zylindrischer Rohling wird zwischen zwei Walzprofile eingeführt und um seine Achse drehend an den Walzprofilen abgerollt. Die Walzprofile prägen dabei in den Umfang des Rohlings Rillen für das Gewinde ein. Die erreichbar hohe Qualität des Gewindes ist unter Anderem dem Abrollen und damit einhergehenden gleichmäßigen radialen Abmessungen begründet. Nachteilig ist die Länge des Gewindes durch die Breite verwendeter Walzprofile vorgegeben.

Das erfindungsgemäße Herstellungsverfahren für ein Gewinde in ein längliches Halbzeug sieht die folgenden Schritte vor: Formen, insbesondere Längswalzen, wenigstens zweier längsverlaufender Nuten in einen Rohling und Längswalzen eines Gewindes in die umfänglich durch die Nuten begrenzten Bereiche. Ein Abstand der Nutböden der Nuten zu einer Achse des Rohlings ist geringer als ein Abstand eines Gewindegrund der Gewinde zu der Achse. Der Abstand des Gewindegrunds zu der Achse ist der halbe Kerndurchmesser des Gewindes.

Das Längswalzen ist eigentlich ungünstig für das Herstellen eines Gewindes, da es im Gegensatz zum Querwalzen nicht die drehende Symmetrie des Gewindes berücksichtigt. Das beim Walzen fließende Material wird nicht gleichmäßig entlang des Umfangs verschoben. Im Bereich der seitlichen Ränder der Walzprofile kann das Material unkontrolliert ausweichen. Die Nuten können das seitlich ausweichende Material auffangen, um eine Bildung von Graten oder sonstige in den Gewindegang radial vorstehende Strukturen zu vermeiden. Eine Schwächung des Gewindes aufgrund der Nuten gebildeten Lücken des Gewindes wird dafür in Kauf genommen.

Eine Ausgestaltung sieht vor, dass der Rohling längs einer Bewegungsrichtung geführt wird. Walzen zum Formen des Gewindes drehen sich um eine Rotationsachse senkrecht zu der Bewegungsrichtung.

Eine Ausgestaltung sieht vor, dass bei einer Anzahl von N Nuten die Walzen um einen Quotienten von 180 Grad zu der Anzahl N gegenüber den Nuten um die Achse gedreht sind. Ein seitlicher Rand eines Walzprofils einer der Walzen kann in einer Ebene mit der Achse und der einer der Nuten bewegt werden. Die Nuten können ebenfalls längsgewalzt werden. Die Walzen zum Längswalzen der Nuten sind um den Quotienten gegenüber den Walzen zum Gewindewalzen um die Achse gedreht angeordnet. Die Walzen zum Gewindewalzen können den Rohling ringförmig umschließen.

Es kann ein Halbzeug, insbesondere ein Ankerbolzen, vorgesehen sein, das einen zylindrischen Abschnitt hat, in dessen Umfang wenigstens zwei zu einer Achse des zylindrischen Abschnitts parallele Nuten eingeformt sind. Die Bereiche zwischen den Nuten sind zu Segmenten eines Gewindes umgeformt. Eine Ausgestaltung sieht vor, dass Gewindeflanken des Gewindes an jeweils zwei der Nuten angrenzen. Ein Anteil des Gewindes am Umfang des Halbzeugs kann wenigstens 80% betragen. Eine Ausgestaltung sieht vor, dass sich jede der Nuten über die gesamte Länge des Gewindes erstreckt.

Eine Ausgestaltung sieht vor, dass ein weiterer Abschnitt zu einem kegelförmigen Spreizkörper umgeformt ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Anker,
- Fig. 2: einen Querschnitt in der Ebene II-II durch den Anker,
- Fig. 3: und 4 ein Verfahrensschritt zur Herstellung des Ankers;
- Fig. 5: und 6 einen weiteren Verfahrensschritt zur Herstellung des Ankers.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

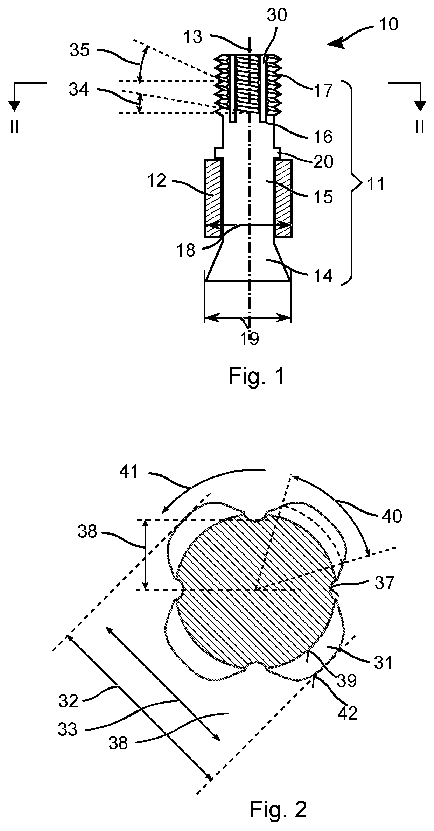

Fig. 1 zeigt einen Anker **10,** der beispielhaft als Spreizanker mit einem Ankerbolzen **11** und einer Spreizhülse **12** ausgebildet ist. Der Ankerbolzen **11** hat längs seiner Achse **13** einen Spreizkörper **14,** einen Hals **15,** einem Schaft **16** und ein Gewinde **17.** Die Spreizhülse **12** ist, längs dem Ankerbolzen **11** beweglich, auf dem Hals **15** vormontiert. Der Außendurchmesser **18** der Spreizhülse **12** ist etwa gleichgroß, wie der größte Durchmesser **19** des Spreizkörpers **14.** Der Anker **10** wird in ein Bohrloch mit einem Durchmesser entsprechend dem Außendurchmesser **18** der Spreizhülse **12** eingetrieben. Ein ringförmiger Bund **20** zwischen dem Hals **15** und dem Gewinde **17** kann ein Abstreifen der Spreizhülse **12** von dem Ankerbolzen **11** verhindern. Beim Spannen des Ankers **10** gegen den Untergrund, z.B. mittels einer Mutter **21,** wird der Spreizkörper **14** in die Spreizhülse **12** hineingezogen und klemmt die Spreizhülse **12** an einer Seitenwand des Bohrlochs fest.

Das Gewinde **17** ist durch mehrere parallel zur Achse **13** verlaufende Nuten **30** unterbrochen. Die Nuten **30** sind vorzugsweise gleichverteilt um die Achse **13** angeordnet, z.B. vier Nuten in Abständen von 90 Grad. Die Nuten **30** erstrecken sich vorzugsweise über die gesamte Länge des Gewindes **17.** Das eingängige Gewinde **17** setzt sich somit aus mehreren Segmenten **31** zusammen. Jedes der Segmente **31** hat die charakteristischen Eigenschaften eines Gewindes **17,** wie z.B. einen Nenndurchmesser **32,** einen Kerndurchmesser **33,** einen Steigungswinkel **34,** einen Flankenwinkel **35** und eine Ganghöhe **36.** Die Segmente **31** sind vorzugsweise entsprechend einem Spitzgewinde ausgebildet und bilden die Gewindeflanken des Gewindes. Vorzugsweise sind die charakteristischen Eigenschaften aller Segmente **31** identisch. Der Flankenwinkel beträgt beispielsweise 60 Grad. Der Steigungswinkel **34** liegt beispielsweise im Bereich zwischen 2 und 5 Grad.

Die Segmente **31** umschließen nur einen Bruchteil eines Umfangs, bei den beispielsweise vier Nuten **30** zwischen 75 Grad bis 85 Grad.

Ein Nutboden **37** der Nuten **30** ist vorzugsweise in einem konstanten Abstand **38** zu der Achse **13.** Ein halber Kerndurchmesser **33** des Gewindes **17** ist vorzugsweise größer als der Abstand **38,** d.h. ein Gewindegrund **39** ist weiter von der Achse **13** entfernt als die Nuten **37.** Die Nuten **30** sind tiefer in den Ankerbolzen **11** eingeformt als das Gewinde **17.**

Eine Breite **40** der Nuten **30** in Umfangsrichtung **41** ist deutlich geringer als eine Breite der Segmente **31.** Vorzugsweise haben die Segmente **31** einen Anteil von mehr als 80% (etwa 300 Grad) an dem gesamten Umfang. Die Grenzen der Segmente **31** können beispielsweise als die Punkte festgelegt werden, an denen der Gewinderücken **42** nur in der Hälfte seines maximalen Abstands zu dem Gewindegrund **39** beabstandet ist (gleich einem Viertel der Differenz von Nenndurchmesser **32** zu Kerndurchmesser **33**).

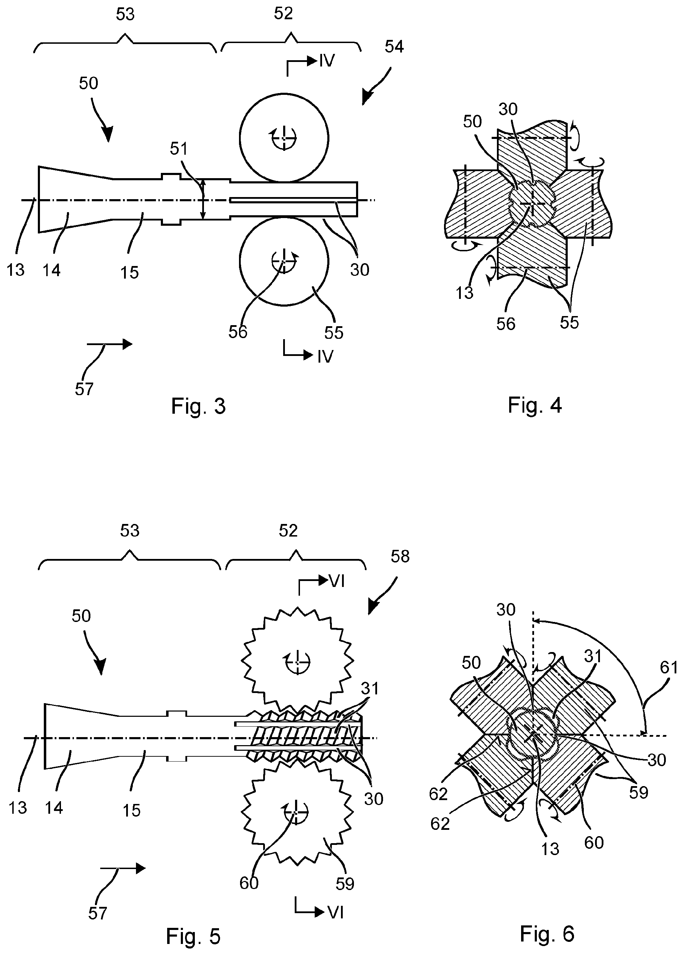

Fig. 4 bis 6 illustrieren ein beispielhaftes Herstellungsverfahren für den Ankerbolzen **11.** Die Figuren 4 und 6 sind die Querschnitte durch den Ankerbolzen **11** und ein Herstellungswerkzeug in den Ebenen IV-IV bzw. VI-VI. Ein Rohling **50** ist beispielsweise ein zylindrisches Stück Draht. Der ungeformte Querschnitt des Drahts ist vorzugsweise kreisförmig. Ein Durchmesser **51** des Drahts ist wenigstens in einem Abschnitt **52** für das Gewinde **17** konstant und auf das Gewinde **17** abgestimmt. Beispielsweise kann der Durchmesser **51** des Drahts gleich dem Flankendurchmesser des Gewindes **17,** d.h. etwa dem Mittelwert von Außen- und Kerndurchmesser des Gewindes **17** betragen. Der beispielhafte Rohling 50 ist bereits durch Walzverfahren in einem Abschnitt **53** zu dem Spreizkörper **14** und dem Hals **15** umgeformt. Alternativ kann der gesamte Rohling **50** einen Durchmesser aufweisen, insbesondere wenn das Gewinde **17** längs des gesamten Rohlings **50** eingeformt werden soll.

Der Rohling **50** wird einem ersten Walzgestell **54** zugeführt, welches die Nuten **30** in den Abschnitt **52** einwalzt. Das erste Walzgestell **54** hat mehrere Walzen **55** zwischen denen der Rohling **50** hindurchgeführt wird. Die Walzen **55** werden um ihre Achse **56** gedreht, welche senkrecht zu einer Bewegungsrichtung **57** des Rohlings **50** sind. Jede der Walzen **55** prägt längs der Achse **13** eine Nut **30** in den Rohling **50** ein. Das dargestellte Walzgestell **54** hat vier den gesamten Umfang des Rohlings **50** umgreifende Walzen **55.** Eine alternative Ausführungsform hat zwei oder mehrere Paare gegenüberliegender Walzen und eine Orientierung benachbarter Paare zu der Achse **13** ist verschieden.

Der mit den Nuten **30** versehene Rohling **50** wird einem zweiten Walzgestell **58** zugeführt, welches das Gewinde **17** einformt. Das zweite Walzgestell **58** hat mehrere Walzen **59** zwischen denen der Rohling **50** hindurchgeführt wird. Die Walzen **59** werden um ihre Achse **60** gedreht, welche senkrecht zu einer Bewegungsrichtung **57** des Rohlings **50** sind. Jede der Walzen **59** prägt längs der Achse **13** Segmente **31** des Gewindes in den Rohling **50** ein. Das vorteilhaft ausgebildete Walzgestell **58** umschließt umfänglich den Rohling **50.** Die Anzahl der Walzen **59** entspricht der Zahl der zuvor eingeprägten Nuten **30.** Jede der Walzen **59** überdeckt vollständig einen Winkelabschnitt **61** zwischen zwei Nuten **30.** Jeder seitliche Rand **62** der Walzprofile liegt in einer Ebene mit einer der Nuten **30.** Das Walzprofil berührt vorzugsweise nicht den Nutenboden **37.** Der Nutboden **37** kann teilweise durch beim Walzen verfließendes Material aufgefüllt werden.

Die Walzen **59** des zweiten Walzgestells **58** sind gegenüber den Walzen **55** des ersten Walzgestells **54** um 45 Grad um die Achse **13** gedreht angeordnet. Der Drehwinkel entspricht dem Quotienten von 180 Grad und der Anzahl der Nuten **30.**

Der Rohling **50** kann durch die Walzen in einer Bewegungsrichtung hindurchgeführt werden. Alternativ kann der Rohling **50** in Bewegungsrichtung zwischen die Walzen geschoben und dann entgegen der Bewegungsrichtung aus den Walzen entnommen werden.

## Patentansprüche

1. Herstellungsverfahren für ein Gewinde **(17)** in ein längliches Halbzeug **(11)** mit den Schritten:
Formen wenigstens zweier längsverlaufender Nuten **(30)** in einen Rohling **(50)** und Längswalzen eines Gewindes **(17)** in die umfänglich durch die Nuten **(30)** begrenzten Bereiche, wobei ein Abstand **(38)** der Nutböden **(37)** der Nuten **(30)** zu einer Achse **(13)** des Rohlings **(50)** geringer als ein Abstand eines Gewindegrunds **(39)** des Gewindes **(17)** zu der Achse **(13)** ist.

2. Herstellungsverfahren nach Anspruch 1, **dadurch gekennzeichnet, dass** der Rohling **(50)** längs einer Bewegungsrichtung **(57)** geführt wird und Walzen **(59)** zum Formen des Gewindes **(17)** sich um eine Rotationsachse **(60)** senkrecht zu der Bewegungsrichtung **(57)** drehen.

3. Herstellungsverfahren nach Anspruch 2, **dadurch gekennzeichnet, dass** bei einer Anzahl von N Nuten die Walzen **(59)** um einen Quotienten von 180 Grad zu der Anzahl N gegenüber den Nuten **(30)** um die Achse **(13)** gedreht sind.

4. Herstellungsverfahren nach Anspruch 2 oder 3, **dadurch gekennzeichnet, dass** ein seitlicher Rand eines Walzprofils einer der Walzen **(59)** in einer Ebene mit der Achse **(13)** und der einer der Nuten **(30)** bewegt wird.

5. Herstellungsverfahren nach Anspruch 2 bis 4, **dadurch gekennzeichnet, dass** die Walzen **(59)** den Rohling **(50)** ringförmig umschließen.

## Claims

1. Method of producing a thread (17) in an elongated semi-finished product (11), comprising the steps:
forming at least two longitudinally extending grooves (30) in a blank (50) and longitudinally rolling a thread (17) into the regions delimited circumferentially by the grooves (30), a distance (38) from the bottoms (37) of the grooves (30) to an axis (13) of the blank (50) being shorter than a distance from a root (39) of the thread (17) to the axis (13).

2. Production method according to claim 1, **characterised in that** the blank (50) is guided in a direction of movement (57) and rolls (59) for forming the thread (17) rotate about an axis of rotation (60) perpendicular to the direction of movement (57).

3. Production method according to claim 2, **characterised in that**, for a number N of grooves, the rolls (59) are rotated about the axis (13) with respect to the grooves (30) by a quotient of 180 degrees relative to the number N.

4. Production method according to claim 2 or claim 3, **characterised in that** a lateral edge of a profile of one of the rolls (59) is moved in a plane with the axis (13) and one of the grooves (30).

5. Production method according to claims 2 to 4, **characterised in that** the rolls (59) surround the blank (50) in an annular manner.

## Revendications

1. Procédé de fabrication d'un filetage (17) dans un produit semi-fini allongé (11), comportant les étapes consistant à :
former au moins deux rainures (30) s'étendant longitudinalement dans une ébauche (50) et
laminer longitudinalement un filetage (17) dans les zones délimitées circonférenciellement par les rainures (30), une distance (38) entre le fond de rainure (37) des rainures (30) et un axe (13) de l'ébauche (50) étant inférieure à une distance entre un fond de filet (39) du filetage (17) et l'axe (13).

2. Procédé de fabrication selon la revendication 1, **caractérisé en ce que** l'ébauche (50) est guidée le long d'une direction de déplacement (57) et des cylindres (59) tournent pour former le filetage (17) autour d'un axe de rotation (60) perpendiculaire à la direction de déplacement (57).

3. Procédé de fabrication selon la revendication 2, **caractérisé en ce que** pour un nombre de N rainures, les cylindres (59) tournent relativement aux rainures (30) autour de l'axe (13) d'un rapport de 180 degrés sur le nombre N.

4. Procédé de fabrication selon la revendication 2 ou 3, **caractérisé en ce qu'**un bord latéral d'un profil laminé de l'un des cylindres (59) se déplace dans un plan avec l'axe (13) et l'une des rainures (30).

5. Procédé de fabrication selon les revendications 2 à 4, **caractérisé en ce que** les cylindres (59) entourent l'ébauche (50) de manière circulaire.
